# FASCICULE DE BREVET EUROPEEN

(11) **EP 2 459 667 B1**
(45) Date de publication et mention de la délivrance du brevet: **22.02.2017**
(21) Numéro de dépôt: 10745303.7
(22) Date de dépôt: 23.06.2010
(51) Int. Cl.: C09K 5/04

(54) **PROCEDE DE TRANSFERT DE CHALEUR**
WÄRMEÜBERTRAGUNGSVERFAHREN
HEAT TRANSFER PROCESS

(30) Priorité: 28.07.2009 FR 0955261
(43) Date de publication de la demande: 06.06.2012
(60) Demande divisionnaire: 17150137.2
(73) Titulaire: Arkema France, 92700 Colombes (FR)
(72) Inventeur: RACHED, Wissam, F-69630 Chaponost (FR); ABBAS, Laurent, Narbeth,Peesylvania 19072 (US); BOUTIER, Jean-Christophe, F-69600 Oullins (FR)
(74) Mandataire: Dang, Doris
(86) Numéro de dépôt international: PCT/FR2010/051279
(87) Numéro de publication internationale: WO 2011/015737

(56) Documents cités:
- WO-A2-2008/134061
- US-A1- 2006 010 872
- US-A1- 2007 007 488
- US-B1- 6 913 076
- Siegfried Haaf and Helmut Henrici: "Refrigeration technology" In: "Ullmann's Encyclopedia of Industrial Chemistry" 15 juillet 2000 (2000-07-15), John Wiley & Sons, Inc. , online , XP002572156 3. Heat pumps; page 38 - page 39

## Description

La présente invention concerne un procédé de transfert de chaleur à l'aide d'une composition renfermant des hydrofluorooléfines Elle a plus particulièrement pour objet l'utilisation d'une composition renfermant des hydrofluorooléfines dans les pompes à chaleur.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits.

L'industrie de la réfrigération et de la production d'air conditionné a beaucoup investi dans la substitution de ces fluides frigorigènes.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Le document JP 4110388 décrit l'utilisation des hydrofluoropropènes de formule C₃HₘFₙ, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Dans le document WO 2007/002625, des fluorohalogénoalcènes ayant de 3 à 6 atomes de carbone, notamment les tetrafluoropropènes, les pentafluoropropènes et les chlorotrifluoropropènes ont été décrites comme susceptibles d'être utilisées comme fluide de transfert de chaleur.

Le document WO2007/053697 décrit des fluides de transfert de chaleur comprenant des fluoorooléfines ayant au moins 5 atomes de carbone.

Dans le domaine des pompes à chaleur, des substituts au dichlorotetrafluoroéthane (HCFC-114), utilisé dans des conditions de température de condensation élevée, ont été proposés. Ainsi, le document US 6814884 décrit une composition comprenant du 1,1,1,3,3-pentafluorobutane (HFC-365mfc) et au moins un composé choisi parmi le 1,1,1,2 tetrafluoroéthane, le pentafluoroéthane (HFC-125), le 1,1,1,3,3-pentafluoropropane (HFC-245fa) et le 1,1,1,2,3,3,3-heptafluoropropane (HFC-227ea). Cependant, ces composés ont un GWP élevé et présentent des rapports de compression et des glissements de température très élevés par rapport au HCFC-114

Le document US 20090049856 décrit des fluides de transfert de chaleur comprenant le 1,1,1,3,3-pentafluoropropane (HFC-245fa), 1,1,1,2,3,3 hexafluoropropane (HFC-236ea ) et le tetrafluoroethane (HFC-134a). Toutefois, ces mélanges présentent des températures à l'entrée du condenseur (sortie compresseur) très élevée, ce qui implique la surchauffe des parties mécaniques et la diminution du rendement globale du compresseur. En outre, les températures critiques de ces mélanges (autour de 110°C) sont inférieures à la température de condensation souhaitée (120 voir 150°C) rendant leur utilisation impossible dans les pompes à chaleur haute température.

Le document WO2008/134061 décrit un procédé de transfert de chaleur utilisant des compositions comportant du Z-1,1,1,4,4,4-hexafluoro-2--butène

La demanderesse a maintenant découvert que des compositions renfermant des hydrofluorooléfines conviennent tout particulièrement comme fluide de transfert de chaleur dans les pompes à chaleur, en particulier les pompes à chaleur opérant à température de condensation élevée. En outre ces compositions ont un ODP négilgeable et un GWP inférieur à celui des fluides de transfert de chaleur existants. De surcroît, ces mélanges présentent des températures critiques supérieures à 150°C , permettant ainsi leur utilisation dans les pompes à chaleur haute température.

Une pompe à chaleur est un dispositif thermodynamique permettant de transférer de la chaleur du milieu le plus froid vers le milieu le plus chaud. Les pompes à chaleur employées pour le chauffage sont dites à compression et le fonctionnement est basé sur le principe de cycle à compression de fluides, appelés fluides frigorigènes. Ces pompes à chaleur fonctionnent avec des systèmes à compression comportant un seul ou plusieurs étage(s). A un étage donné, lorsque le fluide frigorigène est comprimé et passe de l'état gazeux à l'état liquide, il se produit une réaction exothermique (condensation) qui produit de la chaleur. A l'inverse, si on détend le fluide en le faisant passer de l'état liquide à l'état gazeux, il se produit une réaction endothermique (évaporation), qui produit une sensation de froid. Tout repose donc sur le changement d'état d'un fluide utilisé en circuit fermé.

Chaque étage d'un système à compression comprend (i) une étape d'évaporation au cours de laquelle au contact des calories puisées dans l'environnement, le fluide frigorigène, grâce à son faible point d'ébullition, passe de l'état diphasique (liquide/gaz) à l'état de gaz, (ii) une étape de compression au cours de laquelle le gaz de l'étape précédente est porté à haute pression, (iii) une étape de condensation au cours de laquelle le gaz va transmettre sa chaleur au circuit de chauffage (environnement chaud) ; le fluide frigorigène, toujours comprimé, redevient liquide et (iv) une étape de détente au cours de laquelle la pression du fluide est réduite. Le fluide est prêt pour une nouvelle absorption de calories de l'environnement froid.

La présente invention a pour objet un procédé de transfert de chaleur mettant en oeuvre un système à compression comportant au moins un étage comprenant successivement une étape d'évaporation d'un fluide frigorigène, une étape de compression, une étape de condensation dudit fluide à une température supérieure ou égale à 70°C et une étape de détente dudit fluide caractérisé en ce que le fluide frigorigène comprend au moins une hydrofluorooléfine ayant au moins 4 atomes de carbone représentées par la formule (I) R¹CH=CHR² dans laquelle R¹ et R² représentent indépendamment, des groupements alkyle, ayant de 1 à 6 atomes de carbone, substitués par au moins un atome de fluor, éventuellement par au moins un atome de chlore.

De préférence, au moins un groupement alkyle de l'hydrofluorooléfine est complètement substitué par les atomes de fluor.

De préférence, la température de condensation du fluide frigorigène est comprise entre 70 et 150°C , et avantageusement comprise entre 95 et 140°C.

Comme hydrofluorooléfines de formule (I) particulièrement intéressantes, on peut citer notamment le 1,1,1,4,4,4-hexafluorobut-2-ène, le 1,1,1,4,4,5,5,5-octafluoro-pent-2-ène, le 1,1,1,4-tetrafluorobut-2-ène, le 1,1,1,4,4-pentafluorobut-2-ène, le1,1,4-trifluorobut-2-ène, le 1,1,1-trifluorobut-2-ène, le 4-chloro-1,1,1-trifluorobut-2-ène, le 4-chloro-4,4-difluorobut-2-ene.

Les hydrofluorooléfines de formule (I) préférées peuvent être sous forme cis ou trans ou mélange des deux.

Outre les ou l'hydrofluorooléfine(s) de formule (I), le fluide frigorigène peut comprendre au moins un composé choisi parmi les hydrofluorocarbures, les hydrocarbures, les (hydro)fluoroéthers, les hydrochlorofluoropropènes, les hydrofluoropropènes, les éthers, le formate de méthyle, le dioxyde de carbone et le trans-1,2 dichloroéthylène.

Comme hydrofluorocarbures, on peut citer notamment le 1,1,1,3,3-pentafluorobutane, le 1,1,1,2 tetrafluoroéthane, le pentafluoroéthane, le 1,1,1,3,3-pentafluoropropane, le 1,1,1,2,3-pentafluoropropane, le 1,1,1,2,2-pentafluoropropane, le 1,1,1,3,3,3-hexafluoropropane, le 1,1,2,2,3-pentafluoropropane, le 1,1,1,3,3-pentafluorobutane, le 1,1,1,2,2,3,4,5,5,5-decafluoropentane et le 1,1,1,2,3,3,3-heptafluoropropane.

Les hydrocarbures, ayant au moins trois atomes de carbone sont préférés. Les hydrocarbures à cinq atomes de carbone tels que le pentane, isopentane, cyclopentane sont particulièrement préférées.

Les hydrochlorofluoropropenes préférés sont le 2-chloro-3,3,3-trifluoroprop-1-ene, le 1-chloro-3,3,3-trifluoroprop-1-ene, en particulier le trans_1-chloro-3,3,3-trifluoroprop-1-ene.,
- Les hydrofluoroéthers préférés sont ceux ayant de trois à six atomes de carbone.

Comme hydrofluoroéthers, on peut citer notamment l'heptafluoromethoxy propane, le nonafluoromethoxy butane et le nonafluoroéthoxy butane. L'hydrofluoroéther est disponible sous plusieurs formes isomères tels que le 1,1,1,2,2,3,3,4,4-nonafluoro-éthoxybutane, le 1,1,1,2,3,3 -hexafluoro-2-(trifluorométhyl)-3-éthoxybutane, le 1,1,1,2,2,3,3,4,4-nonafluoro-méthoxybutane, le 1,1,1,2,3,3 -hexafluoro-2-(trifluorométhyl)-3-méthoxybutane, et le 1,1,1,2,2,3,3-heptafluoromethoxypropane.

Les hydrofluoropropènes préférés sont les trifluoropropènes tel que le 1,1,1-trifluoropropène, les tetrafluoropropènes tels que le 2,3,3,3-tetrafluoropropène (HFO-1234yf), et le 1,3,3,3-tetrafluoropropène (cis et/ou trans).

Les éthers peuvent être choisis parmi le diméthyléther, le diéthyléther, le diméthoxyméthane ou le dipropoxyméthane.

De préférence, le fluide frigorigène comprend au moins un hydrofluorooléfine de formule (I) et au moins un hydrofluorocarbure. L'hydrofluorocarbure choisi est avantageusement le 1,1,1,3,3-pentafluorobutane et le 1,1,1,3,3-pentafluoropropane

Des compositions azéotropiques du 1,1,1,4,4,4-hexafluorobut-2-ène ou du 1,1,1,4,4,5,5,5-octafluoro-pent-2-ène avec le formate de méthyl, le pentane, l'isopentane, le cyclopentane ou le trans-1,2 dichloroéthylène peuvent également convenir.

De préférence, le fluide frigorigène comprend au moins 10 % en poids d'hydrofluorooléfines de formule (I)

Selon un mode de réalisation de l'invention, le fluide frigorigène comprend de 40 à 100% en poids de 1,1,1,4,4,4-hexafluorobut-2-ène et de 0 à 60 % en poids d'au moins un composé choisi parmi le pentane, l'isopentane, le cyclopentane et le trans-1,2,dichloroéthylène.

Comme fluides frigorigènes particulièrement préférés, on peut citer ceux comprenant de 60 à 100 % en poids de 1,1,1,4,4,4-hexafluorobut-2-ène et de 0 à 40 % en poids de cyclopentane , pentane, d'isopentane ou trans 1,2-dichloroéthylène.

Le fluide frigorigène utilisé dans la présente invention peut comprendre un stabilisant de l'hydrofluorooléfine. Le stabilisant représente au plus 5 % en poids par rapport à la composition totale du fluide.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Le fluide frigorigène utilisé dans le procédé selon la présente invention peut comprendre des lubrifiants tels que l'huile minérale, alkylbenzène, le polyalfaoléfine, le polyalkylène glycol, le polyolester et le polyvinyl éther. Les lubrifiants utilisés avec le fluide frigorigène peuvent comprendre des nanoparticules afin d'améliorer la conductivité thermique du fluide ainsi que sa compatibilité avec les lubrifiants. Comme nanoparticules, on peut citer notamment les particules d'Al₂O₃ ou de TiO₂.

Les lubrifiants utilisés avec le fluide frigorigène peuvent comprendre des agent de déhumidification type zeolite. Les zeolites absorbent l'eau et ainsi limitent la corrosion et la degradation des performances.

### PARTIE EXPERIMENTALE

Dans ce qui suit :
Evap : évaporateur,
Cond : condenseur,
Temp: température,
Comp: compresseur,
P: pression,
Taux : le taux de compression
COP : coefficient de performance et est défini, lorsqu'il s'agit d'une pompe à chaleur comme étant la puissance chaude utile fournie par le système sur la puissance apportée ou consommée par le système
CAP : capacité volumétrique, c'est la capacité calorifique de chauffage par unité de volume (kJ/m3)
% CAP ou COP c'est le rapport de la valeur du CAP ou COP du fluide par rapport à celui obtenu avec le HCFC-114.

### Exemple 1

Les performances du fluide frigorigène dans les conditions de fonctionnement de pompe à chaleur avec la température à l'évaporateur maintenue à 30°C, à l'entrée du compresseur maintenue à 35°C et au condenseur à 90°C sont données ci-dessous.

Le COP des differents produits est calculé en % du COP du HCFC114 ou R114.

Rendement isentropique du compresseur : 59,3 %
- C: ISOPENTANE
- E: trans-1,2 dichloroéthylène
- H: pentane
- J: 1,1,1,4,4,4-hexafluorobut-2-ène

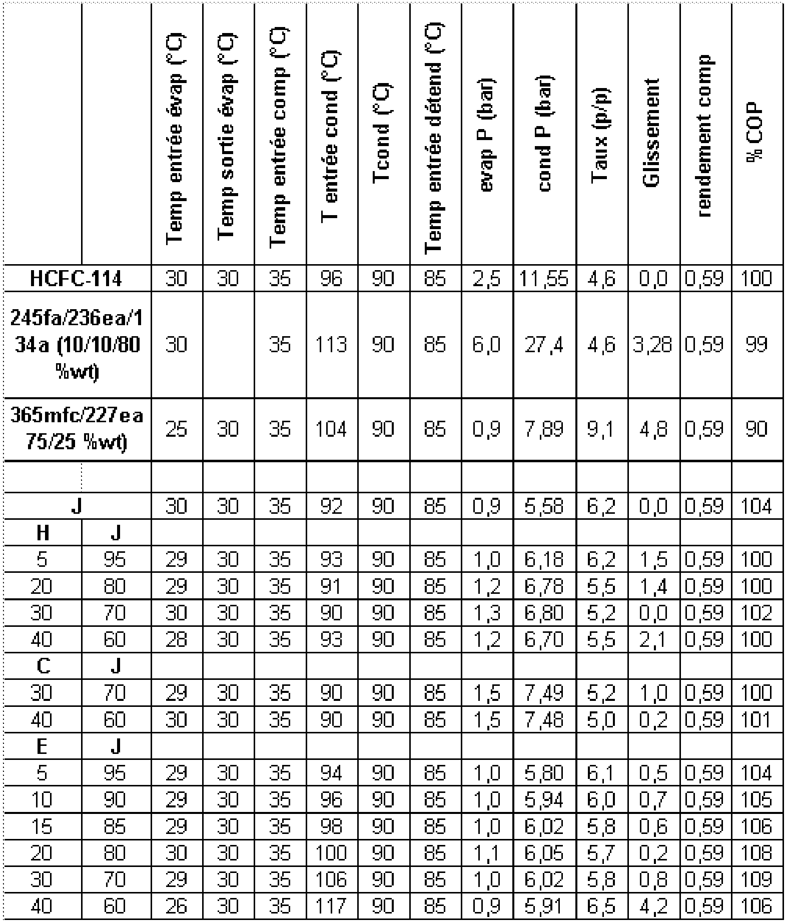

Les résultats montrent une augmentation du COP par rapport au produit de référence (R114).

Les mélanges binaires (H, J) et (C,J) présentent un COP, une température d'entrée condenseur et un taux de compression équivalents au valeur du R114 et ces produits sont des quazi-azéotropes avec des valeurs de glissement de température inférieur à 2,2°C.

Le produit J et les mélanges (E,J) présentent un COP 5% supérieur au COP du produit de référence (R114).

### Exemple 2

Les performances du fluide frigorigène dans les conditions de fonctionnement de pompe à chaleur avec la température à l'évaporateur maintenue à 80°C, à l'entrée du compresseur maintenue à 85°C et au condenseur à 140°C sont données ci-dessous.

Le COP et CAP des differents produits sont calculés en % du COP et CAP du R114 respectivement

Rendement isentropique du compresseur : 59.3 %
- C: ISOPENTANE
- E: trans-1,2 dichloroéthylène
- H: pentane
- J: 1,1,1,4,4,4-hexafluorobut-2-ène

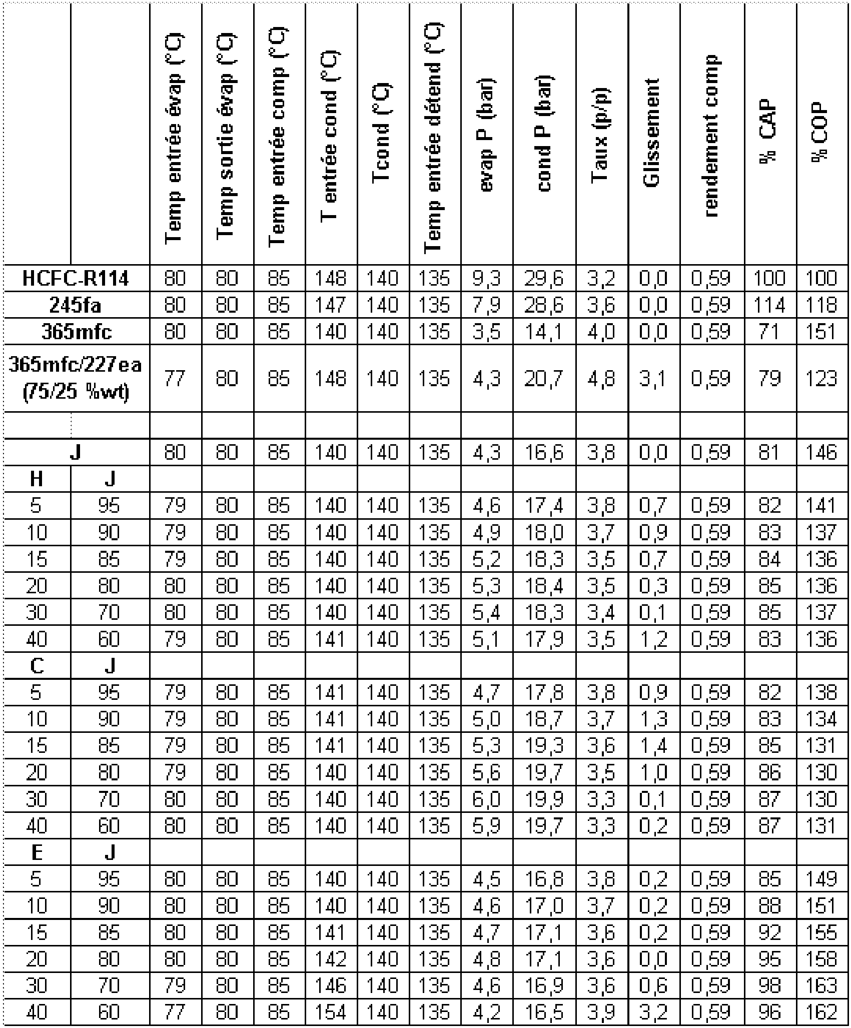

Les résultats montrent que le COP des nouveaux produits est largement supérieur au COP de la référence (R114).

## Revendications

1. Procédé de transfert de chaleur mettant en oeuvre un système à compression comportant au moins un étage comprenant successivement une étape d'évaporation d'un fluide frigorigène, une étape de compression, une étape de condensation dudit fluide à une température supérieure ou égale à 70°C et une étape de détente dudit fluide **caractérisé en ce que** le fluide frigorigène comprend au moins une hydrofluorooléfine ayant au moins 4 atomes de carbone représentées par la formule R¹CH=CHR² dans laquelle R¹ et R² représentent indépendamment, des groupements alkyle, ayant de 1 à 6 atomes de carbone, substitués par au moins un atome de fluor, éventuellement par au moins un atome de chlore.

2. Procédé selon la revendication 1 **caractérisé en ce que** la température est comprise entre 70 et 150°C, de préférence entre 95 et 140°C.

3. Procédé selon la revendication 1 ou 2 **caractérisé en ce que** le fluide frigorigène comprend en outre au moins un composé choisi parmi les hydrofluorocarbures, les hydrocarbures, les (hydro)fluoroéthers, les hydrochlorofluoropropènes, les hydrofluoropropènes, les éthers, le formate de méthyle, le dioxyde de carbone et le trans-1,2 dichloroéthylène.

4. Procédé selon l'une quelconque des revendications 1 à 3 **caractérisé en ce que** le fluide frigorigène comprend au moins un hydrofluorocarbure choisi parmi le 1,1,1,3,3-pentafluorobutane et le 1,1,1,3,3-pentafluoropropane.

5. Procédé selon l'une quelconque des revendications 1 à 4 **caractérisé en ce que** le fluide frigorigène comprend au moins un hydrocarbure choisi parmi le pentane, l'isopentane et le cyclopentane.

6. Procédé selon l'une quelconque des revendications 1 à 5 **caractérisé en ce que** le fluide frigorigène comprend de 40 à 100 % en poids de 1,1,1,4,4,4-hexafluorobut-2-ène et de 0 à 60 % en poids d'au moins un composé choisi parmi le pentane, l'isopentane, le cyclopentane et le trans-1,2,dichloroéthylène.

7. Procédé selon l'une quelconque des revendications 1 à 6 **caractérisé en ce que** le fluide frigorigène comprend de 60 à 100 % en poids de 1,1,1,4,4,4-hexafluorobut-2-ène et de 0 à 40 % en poids de cyclopentane , pentane, d'isopentane ou trans 1,2-dichloroéthylène.

8. Procédé selon l'une quelconque des revendications 1 à 7 **caractérisé en ce que** le fluide frigorigène comprend un stabilisant.

9. Procédé selon l'une quelconque des revendications 1 à 8 **caractérisé en ce que** le fluide frigorigène comprend un lubrifiant.

10. Procédé selon la revendication 9 **caractérisé en ce que** le lubrifiant est le le polyalkylène glycol, le polyolester ou le polyvinyl éther.

## Patentansprüche

1. Verfahren zur Übertragung von Wärme unter Verwendung eines Verdichtungssystems mit mindestens einer Stufe, die nacheinander einen Schritt des Verdampfens eines Kältemittelfluids, einen Schritt des Verdichtens, einen Schritt des Kondensierens des Fluids bei einer Temperatur größer gleich 70°C und einen Schritt des Entspannens des Fluids umfasst, **dadurch gekennzeichnet, dass** das Kältemittelfluid mindestens ein Hydrofluorolefin mit mindestens 4 Kohlenstoffatomen, das durch die Formel R¹CH=CHR², in der R¹ und R² unabhängig voneinander für Alkylgruppen mit 1 bis 6 Kohlenstoffatomen, die durch mindestens ein Fluoratom und gegebenenfalls durch mindestens ein Chloratom substituiert sind, stehen, wiedergegeben wird, umfasst.

2. Verfahren nach Anspruch 1, **dadurch gekennzeichnet, dass** die Temperatur zwischen 70 und 150°C, vorzugsweise zwischen 95 und 140°C, liegt.

3. Verfahren nach Anspruch 1 oder 2, **dadurch gekennzeichnet, dass** das Kältemittelfluid außerdem mindestens eine Verbindung, die aus teilfluorierten Fluorkohlenwasserstoffen, Kohlenwasserstoffen, (Hydro)fluorethern, Hydrochlorfluorpropenen, Hydrofluorpropenen, Ethern, Ameisensäuremethylester, Kohlendioxid und trans-1,2-Dichlorethylen ausgewählt ist, umfasst.

4. Verfahren nach einem der Ansprüche 1 bis 3, **dadurch gekennzeichnet, dass** das Kältemittelfluid mindestens einen teilfluorierten Fluorkohlenwasserstoff, der aus 1,1,1,3,3-Pentafluorbutan und 1,1,1,3,3-Pentafluorpropan ausgewählt ist, umfasst.

5. Verfahren nach einem der Ansprüche 1 bis 4, **dadurch gekennzeichnet, dass** das Kältemittelfluid mindestens einen Kohlenwasserstoff, der aus Pentan, Isopentan und Cyclopentan ausgewählt ist, umfasst.

6. Verfahren nach einem der Ansprüche 1 bis 5, **dadurch gekennzeichnet, dass** das Kältemittelfluid 40 bis 100 Gew.-% 1,1,1,4,4,4-Hexafluorbut-2-en und 0 bis 60 Gew.-% mindestens einer Verbindung, die aus Pentan, Isopentan, Cyclopentan und trans-1,2-Dichlorethylen ausgewählt ist, umfasst.

7. Verfahren nach einem der Ansprüche 1 bis 6, **dadurch gekennzeichnet, dass** das Kältemittelfluid 60 bis 100 Gew.-% 1,1,1,4,4,4-Hexafluorbut-2-en und 0 bis 40 Gew.-% Cyclopentan, Pentan, Isopentan oder trans-1,2-Dichlorethylen umfasst.

8. Verfahren nach einem der Ansprüche 1 bis 7, **dadurch gekennzeichnet, dass** das Kältemittelfluid einen Stabilisator umfasst.

9. Verfahren nach einem der Ansprüche 1 bis 8, **dadurch gekennzeichnet, dass** das Kältemittelfluid ein Schmiermittel umfasst.

10. Verfahren nach Anspruch 9, **dadurch gekennzeichnet, dass** es sich bei dem Schmiermittel um Polyalkylenglykol, Polyolester oder Polyvinylether handelt.

## Claims

1. Heat transfer process employing a compression system having at least one stage comprising successively a step of evaporation of a refrigerant, a compression step, a condensation step of said fluid at a temperature greater than or equal to 70°C and an expansion step of said fluid, **characterized in that** the refrigerant comprises at least one hydrofluoroolefin having at least 4 carbon atoms represented by the formula R¹CH=CHR² in which R¹ and R² represent, independently, alkyl groups having from 1 to 6 carbon atoms, substituted with at least one fluorine atom, optionally with at least one chlorine atom.

2. Process according to Claim 1, **characterized in that** the temperature is between 70 and 150°C, preferably between 95 and 140°C.

3. Process according to Claim 1 or 2, **characterized in that** the refrigerant further comprises at least one compound selected from hydrofluorocarbons, hydrocarbons, (hydro)fluoroethers, hydrochlorofluoropropenes, hydrofluoropropenes, ethers, methyl formate, carbon dioxide and trans-1,2-dichloroethylene.

4. Process according to any one of Claims 1 to 3, **characterized in that** the refrigerant comprises at least one hydrofluorocarbon selected from 1,1,1,3,3-pentafluorobutane and 1,1,1,3,3-pentafluoropropane.

5. Process according to any one of Claims 1 to 4, **characterized in that** the refrigerant comprises at least one hydrocarbon selected from pentane, isopentane and cyclopentane.

6. Process according to any one of Claims 1 to 5, **characterized in that** the refrigerant comprises from 40 to 100 wt.% of 1,1,1,4,4,4-hexafluorobut-2-ene and from 0 to 60 wt.% of at least one compound selected from pentane, isopentane, cyclopentane and trans-1,2-dichloroethylene.

7. Process according to any one of Claims 1 to 6, **characterized in that** refrigerant comprises from 60 to 100 wt.% of 1,1,1,4,4,4-hexafluorobut-2-ene and from 0 to 40 wt.% of cyclopentane, pentane, isopentane or trans-1,2-dichloroethylene.

8. Process according to any one of Claims 1 to 7, **characterized in that** the refrigerant comprises a stabilizer.

9. Process according to any one of Claims 1 to 8, **characterized in that** the refrigerant comprises a lubricant.

10. Process according to Claim 9, **characterized in that** the lubricant is polyalkylene glycol, polyol ester or polyvinyl ether.
